# EUROPEAN PATENT APPLICATION

(11) **EP 4 657 189 A1**
(43) Date of publication of application: **03.12.2025**
(21) Application number: 24179232.4
(22) Date of filing: 31.05.2024
(51) Int. Cl.: G05B 19/418, G05B 19/042, G06F 8/34

(54) **SYSTEM AND METHOD FOR ESTABLISHING A RELATIONSHIP BETWEEN PLANT MODELS AND AUTOMATION PROJECTS**

(71) Applicant: Siemens Aktiengesellschaft, 80333 München (DE)
(72) Inventor: Witte, Martin, 91126 Schwabach (DE); Thiagarajan, Sezhiyan, 560102 Bangalore, Karnataka (IN)
(74) Representative: Isarpatent

(57) **Abstract**

The present disclosure discloses a method comprising parsing information associated with a plant structure and an automation project associated with an industrial plant. The plant structure comprises a list of a plurality of entities associated with the industrial plant and the automation project comprises functional specification corresponding to the plurality of entities. The method also comprises identifying a set of relationships among the plurality of entities based on the parsed information and one or more of a set of predefined rules, naming conventions, and reference data. The method further comprises generating a user interface representing a hierarchical structure of the plurality of entities and the corresponding set of relationships in a graphical manner. Each of the plurality of entities is associated with the corresponding functional specification.

## Description

The present invention relates to an industrial automation and control process, and more particularly relates to a system and a method for establishing a relationship among plant models and automation projects.

In the realm of industrial automation, an integration of control applications, Supervisory Control and Data Acquisition (SCADA), and visualization applications plays a pivotal role in enhancing operational efficiency and facilitating real-time decision-making processes. Systems including these applications serve as a central nervous system of manufacturing plants, providing a comprehensive interface for monitoring, controlling, and optimizing various processes and equipment within an industrial environment. Embedded application programs, Programmable Logic Controller (PLC) automation application programs, and Human-Machine Interface (HMI) application programs collectively form a backbone of the industrial environment, enabling seamless communication and interaction between humans and machines.

In general, the plant or machine model is often provided as a Bill of Material (BoM) structure that is used by a user or a system engineer to generate automation projects corresponding to the plant or machine models using conventional engineering tools. However, relations among entities of the plant or model, and an automation structure generated by such users are inflexible and hard to reuse outside of an underlying environment.

In particular, conventional industrial automation solutions fail to provide a consistent management of relations between the entities of the plant or model, and the corresponding automation structures. Moreover, the relation among the entities and the corresponding automation structures as created using the conventional solutions lack flexibility and feasibility with respect to network-based services.

Therefore, there is a requirement for solutions to efficiently create, manage, and maintain such relationships among entities and corresponding automation structure.

In particular, there is a need for a system and a method to overcome the above-identified issues.

According to one embodiment of the present invention, a method comprising parsing information associated with a plant structure and an automation project associated with an industrial plant is disclosed. The plant structure comprises a list of a plurality of entities associated with the industrial plant and the automation project comprises functional specifications corresponding to the plurality of entities. The method further comprises identifying a set of relationships among the plurality of entities based on the parsed information and one or more of a set of predefined rules, naming conventions, and reference data. Moreover, the method comprises generating a user interface representing a hierarchical structure of the plurality of entities and the corresponding set of relationships in a graphical manner. Each of the plurality of entities is associated with the corresponding functional specification. Thus, the method enables effective and efficient handling of various relations among the plurality of entities including manufacturing equipment and/or machines within the industrial plant.

In an embodiment, for parsing the information associated with the plant structure, the method comprises extracting structural information associated with the industrial plant. The structural information comprises equipment type and equipment specifications, material flows, and other asset information corresponding to the plurality of entities.

In an embodiment, the functional specification corresponding to the plurality of entities comprises datapoints, functional blocks, variables, and structured text codes associated with the plurality of entities.

In an embodiment, identifying the set of relationships among the plurality of entities comprises importing the naming convention corresponding to each of the plurality of entities based at least on an automation standard corresponding to the automation project.

In an embodiment, the method comprises receiving an update in at least one of the structure of the plant and a structure of the automation project with respect to one or more entities among the plurality of entities. The method also comprises determining a set of updated relationships corresponding to one or more entities based on the identified update. Thereafter, the method comprises updating the hierarchical structure of the plurality of entities and the corresponding set of relationships with one or more other entities based on the determined set of updated relationships. The method thus enables automatic generation and updating of relationships among the entities of the plant.

In an embodiment, the method comprises receiving a user input to perform an operation on one or more entities among the plurality of entities. Thereafter, the method comprises performing the operation on the one or more entities based on the received user input and the hierarchical structure of the plurality of entities. The operation comprises at least one of extracting information corresponding to the one or more entities, executing a function element corresponding to the one or more entities, and activating or deactivating the one or more entities. Thus, the method performs management of the entities within the industrial plant effectively and efficiently.

According to another embodiment of the present invention, disclosed herein is a method that comprises parsing information associated with an automation project of an industrial plant. The automation project comprises functional specification corresponding to a plurality of entities. The method also comprises importing naming conventions corresponding to each of the plurality of entities based at least on an automation standard corresponding to the automation project. Moreover, the method comprises identifying a set of relationships among the plurality of entities based on the parsed information and one or more of a set of predefined rules, the imported naming conventions, and reference data. The method further comprises generating a user interface representing a hierarchical structure of the plurality of entities and the corresponding set of relationships in a graphical manner, wherein each of the plurality of entities is associated with the corresponding functional specification.

According to another embodiment of the present invention, a system comprises a memory and one or more processors communicably coupled to the memory. The memory comprises a plurality of modules in the form of programmable instructions executable by the one or more processors. The plurality of modules comprises a parsing module configured to parse information associated with a plant structure and an automation project associated with an industrial plant. The plant structure comprises a list of a plurality of entities associated with the industrial plant and the automation project comprises functional specification corresponding to the plurality of entities. The plurality of modules also comprises a relationship module configured to identify a set of relationships among the plurality of entities based on the parsed information and one or more of a set of predefined rules, naming conventions, and reference data. Further, the plurality of modules comprises a user interface module configured to generate a user interface representing a hierarchical structure of the plurality of entities and the corresponding set of relationships in a graphical manner. Each of the plurality of entities is associated with the corresponding functional specification.

According to another embodiment of the present invention, a computer-program product is disclosed. The computer-program product has machine-readable instructions stored therein, that when executed by one or more processors, cause the one or more processors to perform one or more methods, as discussed throughout the present invention.

According to another embodiment of the present invention, a non-transitory computer-readable medium is disclosed. The non-transitory computer-readable medium is encoded with executable instructions, that when executed by one or more processors, cause the one or more processors to perform one or more methods, as discussed throughout the present invention.

To further clarify the advantages and features of the present invention, a more particular description of the invention will be rendered by reference to specific embodiments thereof, which are illustrated in the appended drawings. It is appreciated that these drawings depict only typical embodiments of the invention and are therefore not to be considered limiting of its scope. The invention will be described and explained with additional specificity and detail with the accompanying drawings.

These and other features, aspects, and advantages of the present invention will become better understood when the following detailed description is read with reference to the accompanying drawings in which like characters represent like parts throughout the drawings, wherein:
**FIG. 1** illustrates an overview of an industrial automation and control environment, according to an embodiment of the present invention;
**FIG. 2** illustrates a detailed block diagram of a system for establishing a relationship between plant models and automation projects, according to an embodiment of the present invention;
**FIG. 3A-3B** illustrate user interface (Uls) of an automation project, according to an embodiment of the present invention;
**FIG. 4** illustrates a user interface representing functional specification associated with various entities of a plant, according to an embodiment of the present invention;
**FIG. 5** illustrates a user interface generated by the system, according to yet another embodiment of the present invention;
**FIG. 6** illustrates an exemplary process flow depicting a method for establishing relationship between plant models and automation projects, according to an embodiment of the present invention; and
**FIG. 7** illustrates an exemplary process flow depicting a method for establishing relationship between plant models and automation projects, according to an embodiment of the present invention.

Further, skilled artisans will appreciate that elements in the drawings are illustrated for simplicity and may not have necessarily been drawn to scale. For example, the flow charts illustrate the method in terms of the most prominent steps involved to help improve understanding of aspects of the present invention. Furthermore, in terms of the construction of the device, one or more components of the device may have been represented in the drawings by conventional symbols, and the drawings may show only those specific details that are pertinent to understanding the embodiments of the present invention so as not to obscure the drawings with details that will be readily apparent to those of ordinary skill in the art having the benefit of the description herein.

For the purpose of promoting an understanding of the principles of the invention, reference will now be made to the various embodiments and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are explanatory of the invention and are not intended to be restrictive thereof.

Reference throughout this specification to "an aspect", "another aspect" or similar language means that a particular feature, structure, or characteristic described in connection with the embodiment is included in at least one embodiment of the present invention. Thus, appearances of the phrase "in an embodiment", "in another embodiment" and similar language throughout this specification may, but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components preceded by "comprises... a" does not, without more constraints, preclude the existence of other devices or other sub-systems or other elements or other structures or other components or additional devices or additional sub-systems or additional elements or additional structures or additional components.

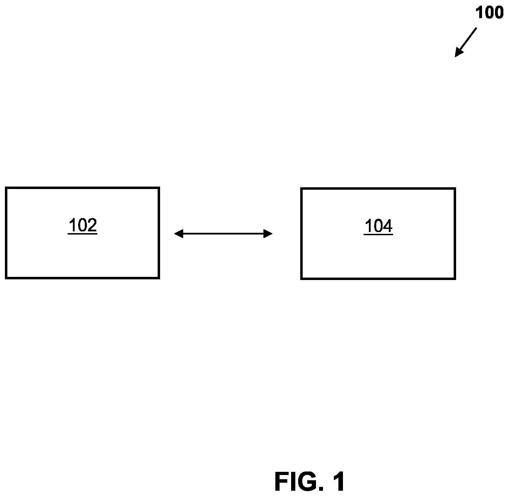

**FIG. 1** illustrates an overview of an industrial automation and control environment 100 (hereinafter referred to as the environment 100), according to an embodiment of the present invention. The environment 100 comprises one or more user devices 102 (hereinafter referred to as "the user device 102") and a system 104 for establishing a relationship between plant models and automation projects.

The user device 102 may act as an interface between a user and the system 104. Example of the user device 102 may include, but is not limited to, a personal computer, a tablet, a laptop, a control server, a centralized server computer, a control panel, and the like. The user device 102 may be communicably coupled with the system 104. The user device 102 may include information associated with a plant structure and/or an automation project corresponding to an industrial plant. In one embodiment, the user device 102 may provide a User Interface (Ul) to enable the user to provide the information associated with the plant structure and/or the automation project associated with the industrial plant. In one non-limiting embodiment, the user device 102 may include a processing unit and a memory unit configured to process and store the information associated with the plant structure and/or the automation project.

The information associated with the plant structure may correspond to structural information of the industrial plant. In particular, such structural information may include, but are not limited to, design specifications, and ladder logic diagrams corresponding to a plurality of entities of the industrial plant. In particular, the plant structure of the industrial plant may define the layout and organization of various components, including various machineries, within the plant. The information associated with the plant structure may also include information related to the production area that covers assembly lines, machining stations, processing units, etc. The information associated with the plant structure may further include information related to utilities and service areas such as, power supply area, water treatment, and other services necessary area for the operation of the facility. In some embodiments, the information associated with the plant structure may also include information related to a safety and emergency response area designated for safety equipment, fire safety stations, fire suppression systems, etc. In one embodiment, the design specification may include information related to characteristics and features of various components, equipment, and systems within the industrial plant. The design specification may be defined during a designing phase of the industrial plant. In an embodiment, the design specification may include dimensions, materials, performance criteria, operating conditions, tolerances, and other related details of the one or more entities of the industrial plant. The ladder logic diagrams may represent a control logic associated with the plurality of entities of the industrial plant.

In an embodiment, the user device 102 may also allow the user to provide and/or generate the required information associated with the plant structure of the industrial plant.

The automation project corresponds to functional specification corresponding to the plurality of entities. The functional specification may define behaviors of different entities of the industrial plant. The functional specification enables development, implementation, and maintenance of the industrial plant. In particular, the functional specification may define functions and capabilities of each entity of plurality of entities the industrial plant. In one embodiment, the functional specification may define an input, a processing, and an output associated with the entities. The functional specification may also define performance criteria of the entities that include, but is not limited to, throughput, accuracy, and reliability. In an embodiment, the functional specifications corresponding to the plurality of entities comprises datapoints, functional blocks, variables, and structured text codes associated with the plurality of entities. In some embodiments, the functional specification may also define interaction among the plurality of entities of the industrial plant. In particular, the functional specification may include all necessary information related to entities required for designing, implementing, and operating the industrial plant effectively and efficiently while ensuring compliance with safety and regulatory standards. In some embodiments, the automation project may include engineering information such as, but not limited to, automation devices, network configuration, code, screens, etc. In one of the embodiment, the automation project may be a part of Totally Integrated Automation (TIA) portal application. Alternatively, the automation project may be a part of any other automation application programs. The automation project may be represented as a node in a graph database, as explained in the following description. In case of multiple automation projects, the graph database may include a node for each automation project.

In an embodiment, the user device 102 may also allow the user to provide and/or implement the required automation project for the industrial plant.

Further, examples of the plurality of entities of the industrial plant may include, but are not limited to, machineries, control systems (such as, PLCs, SCADA systems), sensors and instruments, pipelines and conveyors, safety systems, power distribution systems, environmental control systems, material handling systems, etc.

The system 104 may either be a standalone entity located remotely from the user device 102 or may be implemented within the user device 102. In one embodiment, the system 104 may be communicably coupled with the user device 102 via a network (not shown). The network may include, without limitation, a direct interconnection, Local Area Network (LAN), Wide Area Network (WAN), wireless network (e.g., using Wireless Application Protocol), the Internet, etc.

The system 104 may be configured to receive the information associated with the plant structure and the automation project of the industrial plant form the user device 102. The system 104 may be configured to parse the received information associated with the plant structure and the automation project associated with the industrial plant. In particular, the system 104 may be configured to extract structural information associated with the industrial plant that enables the system 104 to identify the design specification and/or ladder logic diagrams corresponding to the plurality of entities of the industrial plant. Moreover, the system 104 may be configured to extract the functional specification that defines the datapoints, the functional blocks, the variables, and the structured text codes associated with the plurality of entities based on the received automation project.

The system 104 may be configured to identify a set of relationships and/or define an ontology among the plurality of entities based on the parsed information and one or more of a set of predefined rules, naming conventions, and reference data. The set of predefined rules may correspond to a set of rules defined by the user and/or the system 104 based on user-specified requirements. The set of predefined rules may define an association and/or interaction among the plurality of entities of the industrial plant. The naming conventions may correspond to names associated with the plurality of entities of the industrial plant based on parameters such as, but not limited to, a category of the entity, hierarchy of the entity, a description of the entities, a location of the entity, etc. In one embodiment, the naming convention may be defined based on predefined standards such as, but not limited to, IEC 81346. The reference data may include pre-stored information related to similar entities of the industrial plant. The system 104 may effectively utilize the parsed information and other-related information (as discussed above) to establish a relationship among the plurality of entities. In one embodiment, the system 104 may import the naming convention corresponding to each of the plurality of entities based at least on an automation standard corresponding to the automation project. Examples of such automation standards may include, but are not limited to, International Organization for Standardization (ISO) 9001, ISO 14001, ISO 27001, International Electrotechnical Commission (IEC) 61131, IEC 61511, International Standards on Auditing (ISA)-95, IEC 62443, ISA-95, ISA-88, or Open Platform Communications-Unified Architecture (OPC-UA), etc.

In one embodiment, the system 104 may analyze the information related to the plant structure based on a set of predetermined rules to identify the set of relationships and/or define the required ontologies. In one embodiment, the set of predetermined rules may be defined based on the naming conventions and/or previously defined ontologies.

In some embodiments, the system 104 may utilize information such as, input/output variables, control routines, alarms indicating a problem, and other related information associated with each of the plurality of entities to identify the set of relationships and/or define the required ontologies. The input/output variables and/or the control routines may define implementation of the function of the corresponding entity. The set of relationships and/or the defined ontologies may enable visualization of the plurality of entities at a user interface. In one embodiment, the set of relationships may define a correlation between functions, datapoints, screen elements, and/or variables associated with the entities of the industrial plant.

In one embodiment, the system 104 may import a folder structure of a Programmable Logic Controller (PLC) program block in an automation project corresponding to the industrial plant. The folder structure may have a naming convention according to the automation standard used by the user. The system 104 may utilize the imported folder structure to identify the set of relationships and/or define the ontologies for the plurality of entities.

In an embodiment, the system 104 may import data blocks, functional blocks, and tag structures included within a program block structure/the automation projects. The system 104 may also import Human Machin Interface (HMI) tags from an HMI project corresponding to the industrial plant. In some embodiments, the system 104 may also import Electronic Computer-Aided Design (ECAD) information corresponding to the industrial plant. The ECAD information may include Input/Output (I/O) tags, tag names of the entities, a type of entity, a location of the entity, and so forth. In one embodiment, the system 104 may utilize the above-mentioned imported information to identify the set of relationships and/or define the ontologies for the plurality of entities.

The system 104 may then generate the user interface representing a hierarchical structure of the plurality of entities and the corresponding set of relationships in a graphical manner. In one embodiment, the hierarchical structure may be established based on the parsed information and the set of relationships among the entities. In an embodiment, each of the plurality of entities is associated with the corresponding functional specification. In one embodiment, the hierarchical structure may be associated to a graph database that uses graph structures for data storage, retrieval, and querying. In particular, in the graph database, the plurality of entities of the industrial plant may be represented as nodes, which are interconnected by edges. The system 104 may store the graph database within a memory located locally or remotely from the system 104. The graph database may be able to effectively represent complex relationships among the plurality of entities of the industrial plant. In one embodiment, the graph database may include nodes representing the plurality of entities, edges representing the identified relationships among the plurality of entities, and properties defining operational/functional characteristics of the entities. The graph database may provide various advantages such as, flexibility, relationship representation, and scalability. In one embodiment, the graph database may include a plurality of graphs/graph structures of the entities. The system 104 may define a mapping among said plurality of graphs/graph structures. The system 104 may define said mapping based on the identified set of relationships among the entities and/or predefined rules for establishing said mapping among the plurality of graphs of the graph database. Such predefined rules may be based on naming conventions of the entities, code artifacts, and information associated with the automation project. The plurality of graphs may be stored in a hierarchy where each of the graphs may include a plurality of sub-graphs. Thus, the system 104 may enable effective and efficient management of the plurality of entities of the industrial plant by establishing the ontology or the set of rules, thereby representing the entities as the graph database.

The system 104 may define different ontologies and/or the set of relationships based on the type of entities, for example, plant and machines.

In an embodiment, the system 104 may receive an update in at least one of the structure of the plant and the structure of the automation project with respect to one or more entities among the plurality of entities. The system 104 may then determine a set of updated relationships corresponding to one or more entities based on the identified update. Thereafter, the system 104 may update the hierarchical structure of the plurality of entities and the corresponding set of relationships with one or more other entities based on the determined set of updated relationships. Thus, the system 104 may enable dynamic updates in the plant structure and/or the automation project of the industrial plant.

In one embodiment, the system 104 may be configured to receive a user input to perform an operation on one or more entities among the plurality of entities.

The system 104 may perform the operation on the one or more entities based on the received user input and the hierarchical structure of the plurality of entities. The operation comprises at least one of extracting information corresponding to the one or more entities, executing a function element corresponding to the one or more entities, and activating or deactivating the one or more entities.

The system 104 may provide a query interface to enable the user to update the structure of the plant and the structure of the automation project, and/or perform the operation on the one or more entities. The system 104 may define such interface based on programming languages such as, but not limited to, SPARQL, GraphQL, OWL, SHACL, and/or text-bases search engines.

In one embodiment, the system 104 may generate the user interface with the hierarchical structure of the plurality of entities based only on the automation project of the industrial plant and the corresponding naming conventions.

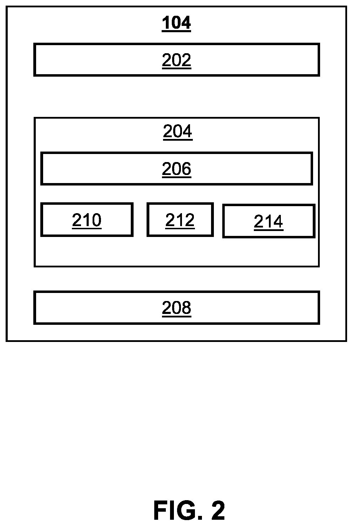

**FIG. 2** illustrates a detailed block diagram of the system 104 for establishing the relationships between plant models and automation projects, according to an embodiment of the present invention.

The system 104 includes one or more processors 202 and a memory 204. As a non-limiting example, the one or more processors 202 are a single processing unit or a set of units each including multiple computing units. The one or more processors 202 are implemented as one or more microprocessors, microcomputers, microcontrollers, digital signal processors, central processing units, state machines, logic circuitries, and/or any devices that manipulate signals based on operational instructions (computer-readable instructions) stored in the memory 204. Among other capabilities, the one or more processors 202 are configured to fetch and execute computer-readable instructions and data stored in the memory 204. The one or more processors 202 include one or a plurality of processors. The plurality of processors is further implemented as a general-purpose processor, such as a central processing unit (CPU), an application processor (AP), or the like, a graphics-only processing unit, such as a graphics processing unit (GPU), a visual processing unit (VPU), and/or an Al-dedicated processor such as a neural processing unit (NPU). The plurality of processors control the processing of the input data in accordance with a predefined operating rule or an artificial intelligence (Al) model stored in the memory 204. The predefined operating rule or the AI model is provided through training or learning.

The one or more processors 202 are disposed in communication with one or more input/output (I/O) devices (for instance the user device 102) via an Input/Output (I/O) interface 208. The I/O interface 208 employs communication code-division multiple access (CDMA), high-speed packet access (HSPA+), global system for mobile communications (GSM), long-term evolution (LTE), WiMax, or the like, etc. In another embodiment of the present invention, the I/O interface 208 employs an ethernet, an industrial wireless local area network (LAN), a process field bus (PROFIBUS), an actuator sensor (AS) interface, and the like.

In some embodiments, the memory 204 is communicatively coupled to the one or more processors 202. The memory 204 is configured to store instructions executable by the one or more processors 202. In one embodiment, the memory 204 communicates via a bus within the system 104. The memory 204 includes, but is not limited to, a non-transitory computer-readable storage media, such as various types of volatile and non-volatile storage media including, but not limited to, random access memory, read-only memory, programmable read-only memory, electrically programmable read-only memory, electrically erasable read-only memory, flash memory, magnetic tape or disk, optical media, and the like. In one example, the memory 204 includes a cache or random-access memory (RAM) for the one or more processors 202. In alternative examples, the memory 204 is separate from the one or more processors 202 such as a system memory, or other memory device. In one embodiment, the memory 204 may be an external storage device or a database for storing data. The memory 204 is operable to store instructions executable by the one or more processors 202. The functions, acts or tasks illustrated in the figures or described are performed by the programmed processor for executing the instructions stored in the memory 204. The functions, acts or tasks are independent of the particular type of instruction set, storage media, processor or processing strategy and may be performed by software, hardware, integrated circuits, firmware, micro-code, and the like, operating alone or in combination. Likewise, processing strategies include multiprocessing, multitasking, parallel processing, and the like.

The memory 204 includes a database 206 to store data. Further, the memory 204 includes an operating system for performing one or more tasks of the system 104, as performed by a generic operating system. In one embodiment, the database 206 is configured to store the information as required by the one or more processors 202 to perform one or more functions for establishing the relationship among the plurality of entities of the industrial plant.

Further, the present invention also contemplates a computer-program product that includes instructions or receives and executes instructions responsive to a propagated signal. Further, the instructions may be transmitted or received over a network via a communication port or interface or using a bus (not shown). The communication port or interface may be a part of the one or more processors 202 or may be a separate component. The communication port may be created in software or may be a physical connection in hardware. The communication port may be configured to connect with the network, and/or the user device 102. For the sake of brevity, the architecture, and standard operations of the memory 204 and the one or more processors 202 are not discussed in detail.

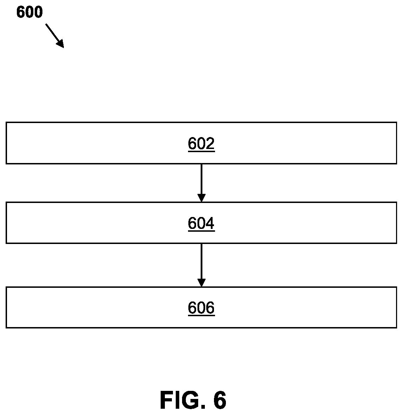

In an embodiment, the computer-program product, having machine-readable instructions stored therein, when executed by one or more processors 202, causes the one or more processors 202 to perform the methods as discussed herein. The details on the method(s) performed by the one or more processors 202 have been elaborated in subsequent paragraphs at least with reference to **FIGS. 6-7****.**

Further, the present invention also contemplates a non-transitory computer-readable medium encoded with executable instructions. The executable instructions, when executed by one or more processors 202, cause the one or more processors 202 to perform the methods as discussed herein. The details on the method(s) performed by the one or more processors 202 have been elaborated in subsequent paragraphs at least with reference to **FIGS. 6-7****.** Examples of computer-readable mediums include nonvolatile, hard-coded type mediums such as read-only memories (ROMs) or erasable, electrically programmable read-only memories (EEPROMs), and user-recordable type mediums such as floppy disks, hard disk drives and compact disk read-only memories (CD-ROMs) or digital versatile disks (DVDs).

In one embodiment, the memory 204 may include a plurality of modules 212. In one embodiment, the memory 204 may include modules such as, a parsing module 210, a relationship module 212, and a user interface module 214. In one embodiment, the one or more processor 202 and/or the parsing module 210 may be configured to parse the information associated with the plant structure and/or the automation project associated with an industrial plant. Further, the one or more processor 202 and/or the relationship module 212 may be configured to identify the set of relationships among the plurality of entities based on the parsed information and one or more of the set of predefined rules, the naming conventions, and the reference data. Thereafter, the one or more processor 202 and/or the user interface module 214 may be configured to generate the user interface representing the hierarchical structure of the plurality of entities and the corresponding set of relationships in the graphical manner.

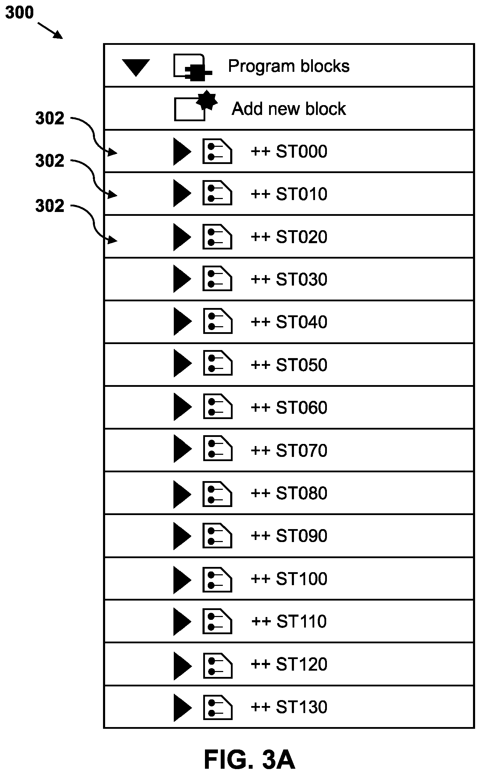

**FIG. 3A-3B** illustrates a user interface 300 of an automation project, according to an embodiment of the present invention. The user interface 300 may be displayed over a display device of the UE 102. The user interface 300 illustrates various folders representing blocks 302 of entities corresponding to an industrial plant. Each block 302 may be associated with the functional specification of the corresponding plurality of entities. In particular, FIG. 3A illustrates a hierarchy of entities included with different stations (i.e., from station 000 to station 130). Each station may correspond to one block 302 in the hierarchy. The hierarchy may be based on the automation standard used by the user in the industrial plant.

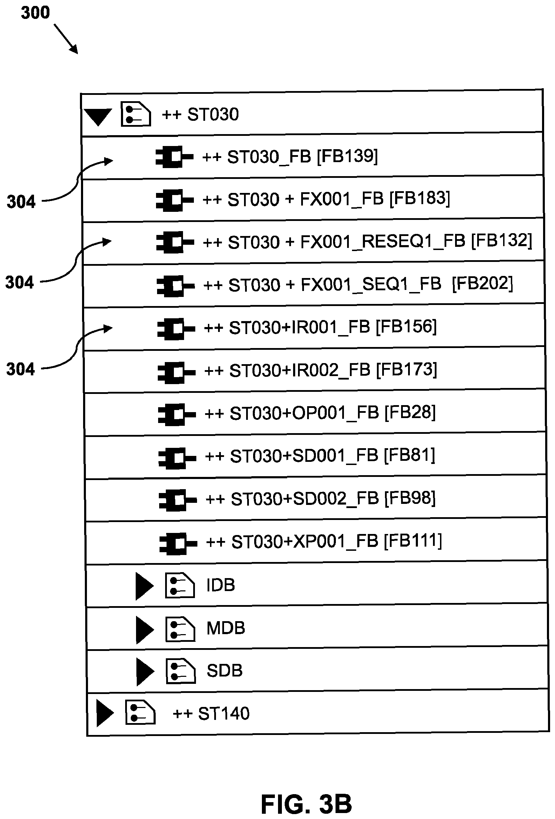

FIG. 3B illustrates an embodiment when the block 302 is expanded to represent the plurality of entities 304 associated with the block 302. The user may be enabled to perform one or more operations on the plurality of entities 304. The entities 304 and/or the associated block 302 may be arranged in a hierarchical manner based on the set of relationships among the plurality of entities 304 as identified by the system 104. Fig. 3B also illustrates a name of functional blocks (FB) associated with the corresponding station 302 and/or the entity 304. For example, an equipment in a station has a function group FX001 being a fixture, two industrial robots IR001 and IR002, an operator panel OP001, two safety doors SD001 and SD002, and a superordinate periphery grouped in XP001.

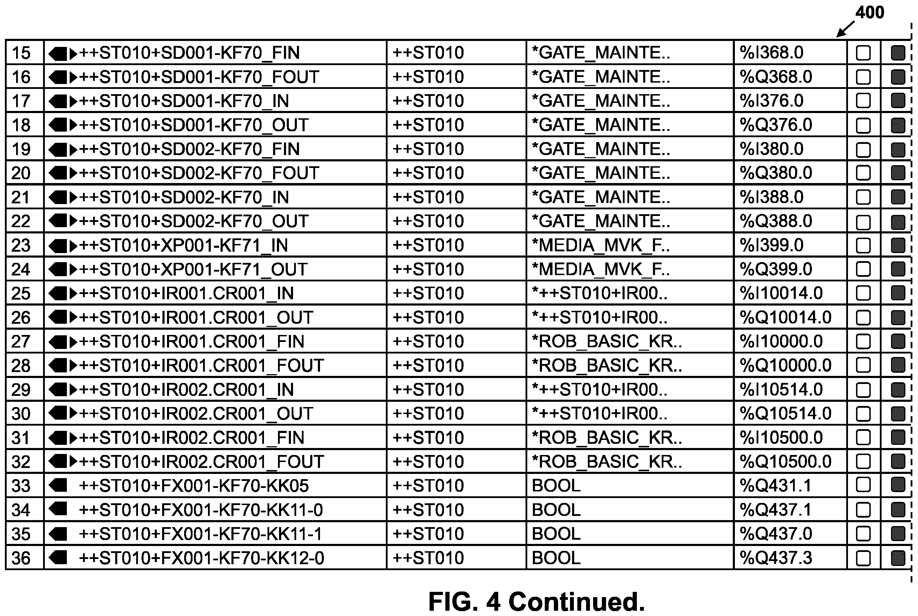

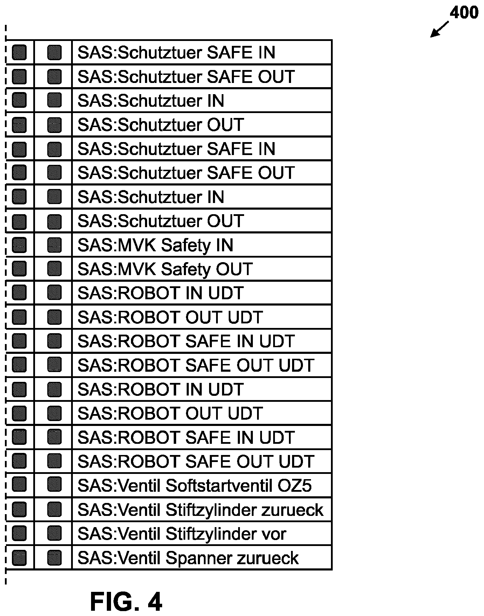

**FIG. 4** illustrates a user interface 400 representing functional specification associated with various entities of a plant, according to an embodiment of the present invention. The user interface 500 may display a plurality of entities and associated functional specifications and/or other related information to the user. The user interface 500 may enable the user to select, update, modify, and/or replace any entity within the automation project. The user interface 500 may also enable the user to monitor, implement, and/or maintain the entities within an environment and/or the industrial plant. In an embodiment, the user interface 500 may correspond to the PLC tag table corresponding to the automation project used in the industrial plant.

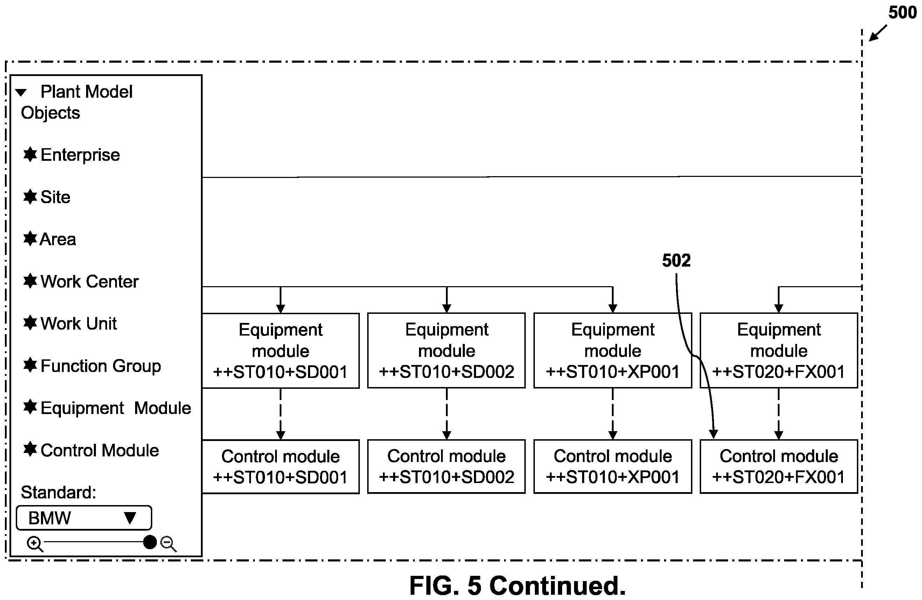

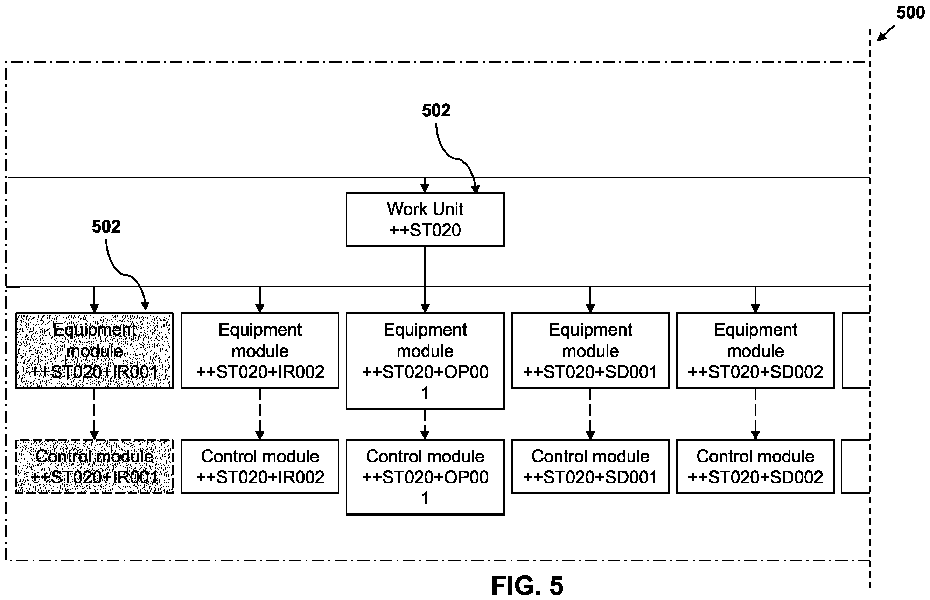

**FIG. 5** illustrates a user interface 500 generated by the system 104, according to yet another embodiment of the present invention. The user interface 500 illustrates a graph database representing the identified relationship among various entities of a plant. The user interface 500 illustrates various nodes 502 of the graph database that represent the plurality of entities of the plant arranged in a hierarchical manner. In one embodiment, each of the plurality of stations and associated blocks illustrated by the user interface 300 may be represented as a node 502 of the graph database. Moreover, each node 502 may be represented by an actionable icon and/or graphical representation, configured to display the corresponding set of relationships associated with said entity/node.

**FIG. 6** illustrates an exemplary process flow depicting a method 600 for establishing a relationship between plant models and automation projects, according to an embodiment of the present invention. The method 600 is performed by the system 104, as shown in FIGS. 1-2. In an embodiment, the method 600 is performed by the one or more processors 202 and/or the modules 210, 212, or 214 of the system 104.

At step 602, the information associated with the plant structure and the automation project associated with the industrial plant is parsed by the system 104. The plant structure may include a list of the plurality of entities associated with the industrial plant and the automation project comprises the functional specification corresponding to the plurality of entities. The functional specification corresponding to the plurality of entities comprises datapoints, functional blocks, variables, and structured text codes associated with the plurality of entities.

In one embodiment, during the parsing, the system 104 may extract structural information associated with the industrial plant. The structural information comprises design specifications and ladder logic diagrams corresponding to the plurality of entities.

At step 604, the set of relationships among the plurality of entities is identified based on the parsed information and one or more of a set of predefined rules, naming conventions, and reference data by the system 104. In one embodiment, the system 104 may import the naming convention corresponding to each of the plurality of entities based at least on an automation standard corresponding to the automation project.

At step 606, a user interface representing a hierarchical structure of the plurality of entities and the corresponding set of relationships in a graphical manner is generated by the system 104. The user interface may be displayed over the user device 102. In the user interface, each of the plurality of entities is associated with the corresponding functional specification.

In an embodiment, the method 600 may also include receiving a user input to perform an operation on one or more entities among the plurality of entities. Thereafter, the method 600 includes performing the operation on the one or more entities based on the received user input and the hierarchical structure of the plurality of entities. The operations may include at least one of extracting information corresponding to the one or more entities, executing a function element corresponding to the one or more entities, and activating or deactivating the one or more entities.

In an embodiment, the method 600 may also include receiving an update in at least one of the structure of the plant and the structure of the automation project with respect to one or more entities among the plurality of entities. The method 600 may further include determining a set of updated relationships corresponding to one or more entities based on the identified update. Thereafter, the method 600 includes updating the hierarchical structure of the plurality of entities and the corresponding set of relationships with one or more other entities based on the determined set of updated relationships.

While the above steps shown in FIG. 6 are described in a particular sequence, the steps may occur in variations to the sequence in accordance with various embodiments of the present invention. Further, the details related to various steps of FIG. 6, which are already covered in the description related to FIGS. 1-5 are not discussed again in detail here for the sake of brevity.

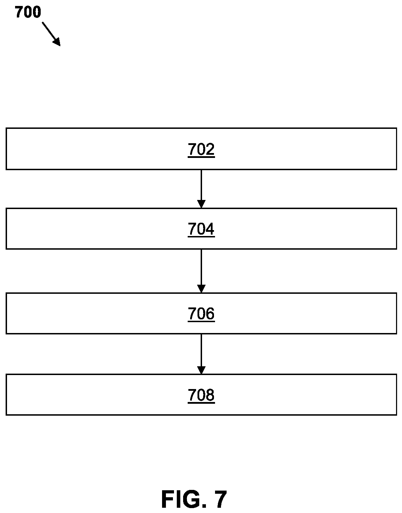

**FIG. 7** illustrates an exemplary process flow depicting a method 700 for establishing a relationship between the plant models and the automation projects, according to another embodiment of the present invention. The method 700 is performed by the system 104, as shown in FIGS. 1-2. In an embodiment, the method 700 is performed by the one or more processors 202 and/or the modules 210, 212, or 214 of the system 104.

At step 702, the information associated with the automation project of the industrial plant is parsed by the system 104.

At step 704, the naming conventions corresponding to each of the plurality of entities are imported by the system 104 based at least on an automation standard corresponding to the automation project.

At step 706, the set of relationships among the plurality of entities is identified based on the parsed information and one or more of a set of predefined rules, the imported naming conventions, and reference data.

At step 708, a user interface representing a hierarchical structure of the plurality of entities and the corresponding set of relationships in a graphical manner is generated.

While the above steps shown in FIG. 7 are described in a particular sequence, the steps may occur in variations to the sequence in accordance with various embodiments of the present invention. Further, the details related to various steps of FIG. 7, which are already covered in the description related to FIGS. 1-5 are not discussed again in detail here for the sake of brevity.

In one embodiment, the methods performed by the system 104 may be understood based on the below example. The system 104 may extract the plant structure and artifacts from the PLC project. For instance, in a Totally Integrated Automation (TIA) project, the system 104 may utilize a TIA-openness Application programming interface (API) to extract the required plant structure and the artefacts. The system 104 may then store the extract information in a graph database according to a PLC artefact ontology. Thereafter, the system 104 may import HMI tag tables and alarm tables, and store the imported information in the graph database according to the HMI/SCADA artifact ontology. The system 104 may then import naming rules of the relevant automation standard or use a predefined naming convention such as, IEC 81346 location naming standard. Thereafter, the system 104 may map the entities of the industrial plant to a hierarchy model, for example, the IS-88 / ISA-99 equipment hierarchy model. Next, the system 104 may import the entity type table or utilize a pre-defined entity type naming standard, for example, the IEC 81346-2 equipment type naming standard. Based on the above, the system 104 may create the hierarchy entities. In particular, the system 104 may create higher level entities as stations and/or work-cells. Thereafter, the system 104 may add lower level entities as functional blocks, tags, etc. The system 104 may store the generated hierarchy in the graph database. In an embodiment, the system 104 may store the generated hierarchy in accordance with an equipment structure ontology derived from ISA-88/ISA-95. The system 104 may then store the relationship among entities defined in the hierarchy to the PLC and HMI artifacts in the graph database.

In another embodiment, the system 104 may perform the above-mentioned method via the naming convention and/or the information related to the automation project.

The present disclosure thus enables effective and efficient handling of various relations among the plurality of entities including manufacturing equipment and/or machines within a plant. The present disclosure enables automatic generation and updating of such relations among the entities of the plant. The present disclosure also enables feasibility of such established relations to be implemented at IT based services.

While specific language has been used to describe the present subject matter, any limitations arising on account thereto, are not intended. As would be apparent to a person in the art, various working modifications may be made to the method in order to implement the inventive concept as taught herein. The drawings and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment.

### List of Reference Numerals

| | |
|---|---|
| Industrial automation and control environment | 100 |
| User device | 102 |
| System | 104 |
| One or more processors | 202 |
| Memory | 204 |
| Database | 206 |
| I/O interface | 208 |
| Parsing Module | 210 |
| Relationship module | 212 |
| User interface module | 214 |
| User Interface | 300, 400, 500 |
| Blocks | 302 |
| Entities | 304 |
| Node | 502 |
| Method | 400 |
| Method steps | 602, 604, 606 |
| Method | 700 |
| Method steps | 702, 704, 706, 708 |
| Modules | 212 |

## Claims

1. A method comprising:
parsing information associated with a plant structure and an automation project associated with an industrial plant, wherein the plant structure comprises a list of a plurality of entities associated with the industrial plant and the automation project comprises functional specification corresponding to the plurality of entities;
identifying a set of relationships among the plurality of entities based on the parsed information and one or more of a set of predefined rules, naming conventions, and reference data; and
generating a user interface representing a hierarchical structure of the plurality of entities and the corresponding set of relationships in a graphical manner, wherein each of the plurality of entities is associated with the corresponding functional specification.

2. The method as claimed in claim 1, wherein parsing the information associated with the plant structure comprises extracting structural information associated with the industrial plant, wherein the structural information comprises design specifications and ladder logic diagrams corresponding to the plurality of entities.

3. The method as claimed in claim 1, wherein the functional specification corresponding to the plurality of entities comprises datapoints, functional blocks, variables, and structured text codes associated with the plurality of entities.

4. The method as claimed in claim 1, wherein identifying the set of relationships among the plurality of entities comprises:
importing the naming convention corresponding to each of the plurality of entities based at least on an automation standard corresponding to the automation project.

5. The method as claimed in claim 1, further comprising:
receiving an update in at least one of the structure of the plant and a structure of the automation project with respect to one or more entities among the plurality of entities;
determining a set of updated relationships corresponding to one or more entities based on the identified update; and
updating the hierarchical structure of the plurality of entities and the corresponding set of relationships with one or more other entities based on the determined set of updated relationships.

6. The method as claimed in claim 1, further comprising:
receiving a user input to perform an operation on one or more entities among the plurality of entities; and
performing the operation on the one or more entities based on the received user input and the hierarchical structure of the plurality of entities.

7. The method as claimed in claim 6, wherein the operation comprises at least one of extracting information corresponding to the one or more entities, executing a function element corresponding to the one or more entities, and activating or deactivating the one or more entities.

8. A method comprising:
parsing information associated with an automation project of an industrial plant, wherein the automation project comprises functional specification corresponding to a plurality of entities;
importing naming conventions corresponding to each of the plurality of entities based at least on an automation standard corresponding to the automation project;
identifying a set of relationships among the plurality of entities based on the parsed information and one or more of a set of predefined rules, the imported naming conventions, and reference data; and
generating a user interface representing a hierarchical structure of the plurality of entities and the corresponding set of relationships in a graphical manner, wherein each of the plurality of entities is associated with the corresponding functional specification.

9. A system comprising:
a memory; and
one or more processors communicatively coupled to the memory, wherein the memory comprises a plurality of modules in the form of programmable instructions executable by the one or more processors, and wherein the plurality of modules comprises:
a parsing module configured to parse information associated with a plant structure and an automation project associated with an industrial plant, wherein the plant structure comprises a list of a plurality of entities associated with the industrial plant and the automation project comprises functional specification corresponding to the plurality of entities;
a relationship module configured to identify a set of relationships among the plurality of entities based on the parsed information and one or more of a set of predefined rules, naming conventions, and reference data; and
a user interface module configured to generate a user interface representing a hierarchical structure of the plurality of entities and the corresponding set of relationships in a graphical manner, wherein each of the plurality of entities is associated with the corresponding functional specification.

10. A computer-program product, having machine-readable instructions stored therein, which when executed by the one or more processors, cause the one or more processors to perform a method according to any of the claims 1 to 8.

11. A non-transitory computer readable medium encoded with executable instructions which, when executed by the one or more processors, cause the one or more processors to perform a method according to any one of the claims 1 to 8.
